# EUROPÄISCHE PATENTSCHRIFT

(11) **EP 1 859 067 B1**
(45) Veröffentlichungstag und Bekanntmachung des Hinweises auf die Patenterteilung: **29.10.2008**
(21) Anmeldenummer: 06706743.9
(22) Anmeldetag: 08.02.2006
(51) Int. Cl.: C22C 37/08, F16J 9/26

(54) **GUSSEISEN AUS LEDEBURIT MIT HOHEM KARBIDANTEIL UND GLEICH VERTEILTER GRAPHITAUSBILDUNG**
LEDEBURITE CAST IRON WITH A HIGH CARBIDE CONTENT AND AN EVENLY DISTRIBUTED GRAPHITE EMBODIMENT
FONTE DE LEDEBURITE A FORTE TENEUR EN CARBURE ET A FORMATION DE GRAPHITE A REPARTITION HOMOGENE

(30) Priorität: 04.03.2005 DE 102005010090
(43) Veröffentlichungstag der Anmeldung: 28.11.2007
(73) Patentinhaber: Federal-Mogul Friedberg GmbH, 86316 Friedberg (DE)
(72) Erfinder: PELSOECZY, Laszlo, 51399 Burscheid (DE); LANGNER, Wilfried, 86316 Friedberg (DE); ZUTZ, Hans-Henning, 42929 Wermelskirchen (DE); GERLE, Thomas, 86161 Augsburg (DE); GOEBBELS, Franz-J., 51399 Burscheid (DE)
(74) Vertreter: Becker Kurig Straus
(86) Internationale Anmeldenummer: PCT/EP2006/001103
(87) Internationale Veröffentlichungsnummer: WO 2006/094591

(56) Entgegenhaltungen:
- DE-A1- 2 618 775
- DE-A1- 10 049 598
- DE-A1- 10 309 386
- US-A1- 2004 214 030

## Beschreibung

### TECHNISCHES GEBIET

Die vorliegende Erfindung bezieht sich auf einen Gusseisenwerkstoff. Insbesondere bezieht sich die vorliegende Erfindung auf einen ledeburitischen Gusseisenwerkstoff mit freier, gleichverteilter Graphitausbildung und hohem Karbidanteil von mindestens 15 Gew.-%, der zur Herstellung von Gleitringringen für die Verwendung in Laufwerksdichtungen oder Zylinderlaufbuchsen von Motoren herangezogen werden kann.

### STAND DER TECHNIK

Laufwerksdichtungen, die mit hohen Umfangsgeschwindigkeiten (> 5 m/s) laufen, werden für technische Anwendungen immer öfter benötigt. Heutzutage verwendete Werkstoffe, wie beispielsweise Ni - Hard, können bei größeren Abmessungen (D > 600 mm) entsprechende Anforderungen bezüglich hoher Umfangsgeschwindigkeiten nicht erfüllen. Die entstehende Reibungswärme an den Kontaktflächen der Gleitringe kann durch unzureichende Wärmeleitfähigkeit des Werkstoffes nicht schnell genug abgeführt werden und es kommt zu Fressern. Damit sind die Dichtflächen zerstört und unzulässige Leckage ist die Folge.

Bei der Herstellung von Laufwerksdichtungen werden als Stand der Technik gehärteter, hochlegierter und unlegierter Stahl, sowie Stellite, Nickelguß, verschiedene Hartguss- und Gusseisenwerkstoffe, wie beispielsweise Ni - Hard und Grauguß eingesetzt.

In speziellen Anwendungsfällen, wo der Durchmesser (D) der Dichtung mehr als 600 mm beträgt, kommen Stahlwerkstoffe aus herstellungstechnischen und anwendungstechnischen Gründen nicht zum Einsatz, da unter anderem die maximal erreichbare Umfangsgeschwindigkeit hiermit weniger als 4 m/s beträgt.

Für den speziellen Einsatzbereich, bei dem der Durchmesser (D) der Dichtung über 600 mm liegt, wird dann beispielsweise ein Hartguss-Werkstoff, wie Ni - Hard 1 eingesetzt, jedoch liegt dessen Umfangsgeschwindigkeitsgrenze bei 5 m/s.

Ein weiterer Werkstoff, wie beispielsweise Siculit (Grauguß), dessen Verschleiß- und Korrosionsverhalten minderwertiger ist, als bei (Ni-Hard 1), wird besonders auf Grund dessen eher selten eingesetzt. US 2004/0214030 offenbart einen Gußeisen, der 2.6 - 3.6 Gew.% Kohlenstoff enthält, der jedoch auch 28 - 40% eutektische Karbide enthält. Das Problem optimaler Verschleiß- und Korrosionsbeständigkeit, Wärmeleitfähigkeit und Leckagefreiheit in Verbindung mit hohen Umfangsgeschwindigkeiten (> 5 m/s) bei Dichtringen im Durchmesserbereich (D > 600 mm) wurde für die Anwendung bei Gleitringdichtungen und/oder Zylinderlaufbuchsen bislang nicht gelöst.

### ZUSAMMENFASSUNG DER ERFINDUNG

Es ist daher Aufgabe der vorliegenden Erfindung, einen Gusseisenwerkstoff für die Herstellung von verschleißfesten und korrosionsbeständigen Gleitringdichtungen oder Zylinderlaufbuchsen mit hoher Wärmeleitfähigkeit zum Einsatz bei hohen Umfangs-/Gleitgeschwindigkeiten (> 5 m/s) und großen Durchmessern (D > 600 mm) bereitzustellen.

Erfindungsgemäß wird die Aufgabe durch einen ledeburitischen Gusseisenwerkstoff mit Graphit in freier Ausbildung und einem Karbidanteil von mindestens 15 Gew.-% entsprechend dem Anspruch 1 gelöst.

Der in dem Werkstoff vorhandene Kohlenstoff ist entweder frei ausgebildet, d.h. er liegt vor als Graphit in räumlich verteilten, konzentrierten Ansammlungen bzw. Bereichen, oder gebunden im Ledeburit als Zementit oder als Karbide bzw. Sonderkarbide im Form von Fe₃C oder MeₓC_{y}.

Die Grundmatrix des durch die Erfindung bereitgestellten Gusseisenwerkstoffs kann, in Abhängigkeit vom Anwendungsfall, perlitisch und/oder bainitisch und/oder martensitisch ausgebildet sein.

Aufgrund der frei verteilten Graphitausbildung weist der durch die Erfindung bereitgestellte Werkstoff eine drei bis vierfach höhere Wärmeleitfähigkeit gegenüber weiß erstarrenden Hartgusswerkstoffen auf.

Durch den mittels der Erfindung bereitgestellten Werkstoff wird eine bessere Wärmeleitfähigkeit im Vergleich zu Hartgußwerkstoffen wie Ni-Hard erzielt, wodurch die bei den Laufwerksdichtungen auftretende Reibungswärme von den Gleitflächen entsprechend besser abgeleitet werden kann. Eine thermische Zerstörung des Schmierfilms und damit das Fressen der Kontaktflächen wird somit auch bei Umfangsgeschwindigkeiten => 5m/s verhindert.

Gemäß einem weiteren Aspekt der vorliegenden Erfindung ist der erfindungsgemäß bereitgestellte Werkstoff aus ledeburitischem Gusseisen mit freier, gleichverteilter Graphitausbildung und einem Karbidanteil von mindestens 15 Gew.-% so ausgebildet, dass seine Zusammensetzung aufweist:
4,1 - 5,0 Gew.-% Kohlenstoff (C),
1,0 -1,8 Gew.% Silizium (Si),
maximal 1,0 Gew.-%, bevorzugt 0,6 - 1,0 Gew.-% Mangan (Mn),
maximal 0,8 Gew.-%, bevorzugt 0,5 Gew.-% Phosphor (P),
maximal 0,3 Gew.-%, bevorzugt 0,1 Gew.% Schwefel (S),
maximal 10,0 Gew.-%, bevorzugt 4,0 Gew.-% Chrom (Cr),
maximal 3,0 Gew.-%, bevorzugt 1,0 Gew.-% Kupfer (Cu),
maximal 3,0 Gew.-%, bevorzugt 1,0 Gew.-% Molybdän (Mo),
maximal 0,25 Gew.-%, bevorzugt 0,2 Gew.-% Zinn (Sn),
maximal 4,0 Gew.-%, bevorzugt 3,0 Gew.-% Nickel (Ni),
maximal 3,0 Gew.-%, bevorzugt 0,5 Gew.-% Vanadium (V), sowie
Eisen und herstellungsbedingte Verunreinigungen als Rest.

Weiter ist es bevorzugt, dass das ledeburitische Gusseisen mit freier Graphitausbildung eine "Mischung" aus Hartguss (Ni-Hard 1) und Grauguss ist.

Des weiteren wird es bevorzugt, dass die Graphitausbildung des durch die Erfindung bereitgestellten ledeburitischen Gußeisen lamellar vorliegt.

Weiter ist es bevorzugt, dass der Graphit des durch die Erfindung bereitgestellten ledeburitischen Gußeisen als Vermikulargraphit vorliegt.

Darüber hinaus ist es bevorzugt, dass das durch die Erfindung bereitgestellte ledeburitischen Gusseisen eine perlitische Grundmasse hat.

Gemäß einer weiteren Ausführungsform der vorliegenden Erfindung ist es bevorzugt, dass das ledeburitischen Gusseisen eine bainitische und/oder martensitische Grundmasse hat.

Es ist weiter bevorzugt, dass bei dem gemäß der Erfindung bereitgestellten ledeburitischen Gusseisen ein Härten und/oder Anlassen des ledeburitischen Gusseisens mittels der üblichen Prozesse der Wärmebehandlung erfolgt.

Gemäß eines weiteren Aspektes der vorliegenden Erfindung ist es bevorzugt, dass das ledeburitische Gusseisen der vorliegenden Erfindung mittels der üblichen Prozesse und Materialien nitriert und/oder beschichtet (z.B. Cr, CKS, PVD, ...usw.) wird.

Weiter wird die Verwendung des durch die Erfindung bereitgestellten Werkstoffs für die Herstellung von Gleitringen in Laufwerksdichtungen bevorzugt.

Es wird außerdem bevorzugt, dass der vorherstehend erwähnte Werkstoff für die Herstellung von Zylinderlaufbuchsen verwendet wird.

Außerdem wird eine Verwendung des Werkstoffs für die Herstellung beliebiger Dichtelemente in Laufwerksdichtungen bevorzugt.

Gemäß eines weiteren Aspektes der vorliegenden Erfindung wird die Verwendung des Werkstoffs als Dichtelement in Laufwerksdichtungen bei hohen Umfangsgeschwindigkeiten (> 5 m/s) und/oder großem Durchmesser der Laufwerksdichtungen (> 600 mm) bevorzugt.

### KURZE BESCHREIBUNG DER FIGUREN

Weitere Vorteile, Merkmale und Anwendungsmöglichkeiten der vorliegenden Erfindung ergeben sich aus der nachfolgenden Beschreibung der bevorzugten Ausführungsformen in Verbindung mit der Zeichnung.

Die Figur 1 zeigt ein Übersichtsdiagramm möglicher Ausbildungsformen von Gusseisen.

Die Figur 2 zeigt eine detaillierte Schnittaufnahme von Ledeburit mit Martensitausbildung (Ni Hard 1) im Maßstab 100:1.

Die Figur 3 zeigt ein Übersichtsdiagramm möglicher Ausbildungsformen von Gusseisen, insbesondere den überlappenden Bereich des ledeburitischen Gusseisens mit Graphit (Werkstoff gemäß Erfindung).

Die Figur 4 zeigt eine schematische Schnittaufnahme von Ledeburit mit Martensitausbildung und Lamellengraphit im Maßstab 100:1, wobei der Lamellengraphit schematisch eingezeichnet wurde.

Die Figur 5 zeigt eine erste beispielhafte, Gew.-% mäßige, chemische Ausführungsform des ledeburitischen Gusseisenwerkstoffs mit einer Härte von 39 HRc.

Die Figur 6 zeigt eine ungeätzte Schnittansicht eines ledeburitischen Gusseisenwerkstoffes gemäß der bevorzugten Ausführungsform von Figur 5 mit einer Härte von 39 HRc und einer entsprechenden, gleich verteilten, Graphitausbildung im Maßstab 100:1.

Die Figur 7 zeigt eine gemäß der Ausführungsform von Figur 5 mit Nital geätzte Schnittansicht eines ledeburitischen Werkstoffs mit einer Härte von 39 HRC im Maßstab 500:1.

Die Figur 8 zeigt eine zweite beispielhafte, Gew.-% mäßige, chemische Ausführungsform eines ledeburitischen Gusseisenwerkstoffs mit einer Härte von 49 HRC.

Die Figur 9 zeigt eine gemäß der Ausführungsform von Figur 8 ungeätzte Schnittansicht des ledeburitischen Gusseisenwerkstoffs gemäß der Ausführungsform von Figur 8 mit einer Härte von 49 HRC und entsprechender gleich verteilter Graphitausbildung im Maßstab 100:1.

Fig. 10 zeigt eine gemäß der Ausführungsform von Figur 8 mit Nital geätzte Schnittansicht eines ledeburitischen Gusseisenwerkstoffs gemäß der Ausführungsform von Fig. 8 mit einer Härte von 49 HRC im Maßstab 500:1

Fig. 11 zeigt eine gemäß der Ausführungsform von Figur 8 mit Nital geätzte Schnittansicht eines ledeburitischen Gusseisenwerkstoffs mit einer Härte von 49 HRC im Maßstab 200:1.

### BESCHREIBUNG DER BEVORZUGTEN AUSFÜHRUNGSFORMEN

Die Erfindung beschäftigt sich mit einem Gusseisenwerkstoff für die Herstellung von verschleißfesten und korrosionsbeständigen Gleitringen für die Verwendung in Laufwerksdichtungen zum Einsatz bei hohen Umfangsgeschwindigkeiten (>5m/s) und/oder großem Durchmesser der Laufwerksdichtungen (=> 600 mm) und/oder für Zylinderlaufbuchsen.

Erfindungsgemäß wird bereitgestellt ein Gusseisenwerkstoff aus ledeburitischem Gusseisen mit freier und gleichverteilter Graphitausbildung, insbesondere Lamellengraphit und/oder Vermikulargraphit und/oder Kugelgraphit, und einem hohem Karbidanteil von mindestens 15 Gew.-%

Der durch die Erfindung bereitgestellte Werkstoff ähnelt Hartguss, beispielsweise Ni-Hard 1 und Ni-Hard 2. Im Vergleich zum reinen Hartguss, weist der durch die Erfindung bereitgestellte Werkstoff allerdings eine zusätzliche, charakteristische freie, gleichverteilte Graphitausbildung (Lamellengraphit und/oder Vermikulargraphit und/oder Kugelgraphit) auf.

Die Grundmatrix des durch die Erfindung bereitgestellten, ledeburitischen Gusseisenwerkstoffs kann in Abhängigkeit vom Anwendungsfall perlitisch und/oder bainitisch und/oder martensitisch ausgebildet sein.

Aufgrund der starken, gleichverteilten Graphitausbildung weist der durch die Erfindung bereitgestellte Werkstoff eine drei bis vierfach höhere Wärmeleitfähigkeit gegenüber weiß erstarrenden Hartgusswerkstoffen (Ni-Hard) auf.

Durch den mittels der Erfindung bereitgestellten Werkstoff, wird eine bessere Wärmeleitfähigkeit im Vergleich zu Hartgußwerkstoffen wie Ni-Hard erzielt, wodurch die bei den Laufwerksdichtungen auftretende Reibungswärme von den Gleitflächen entsprechend besser abgeleitet werden kann.

Aufgrund der verbesserten Wärmeleitfähigkeit des durch die Erfindung bereitgestellten Gusseisenwerkstoffs werden die Gleitflächen der Laufwerksdichtung und ein Schmiermittel, beispielsweise Öl, nicht überhitzt, wodurch es auch bei höheren Umfangsgeschwindigkeiten (> 5 m/s) der Laufwerkdichtungen zu keinem Fressen auf den Dichtflächen kommt.

Als ein weiterer Vorteil des durch die Erfindung bereitgestellten Werkstoffes, kann die hohe Verschleißfestigkeit aufgrund des hohen Karbidanteils von mindestens 15 Gew.-% angesehen werden.

Darüber hinaus verleihen die Legierungselemente Chrom (Cr), Vanadium (V), Molybdän (Mo) und Nickel (Ni) die benötigte Korrosionsbeständigkeit für den durch die Erfindung bereitgestellten Werkstoff.

In Experimenten konnte bestätigt werden, dass ein durch die Erfindung bereitgestellter Werkstoff obiger chemischer gewichtsprozentmäßiger Zusammensetzung eine entsprechende Dichtwirkung (Dichtfunktion) auch bei Umfangsgeschwindigkeiten von 9 m/s und einem Durchmesser (D) der Dichtung von 1105 mm weitestgehend optimal erfüllt.

Darüber hinaus konnte ein Fressen oder Lekage des durch die Erfindung bereitgestellten Werkstoffs im Dichtbereich der Laufwerksdichtung nicht festgestellt werden.

Als ein weiterer Vorteil des durch die vorliegende Erfindung bereitgestellten, ledeburitischen Gusseisenwerkstoffs, kann die erzielte, höhere Verschleißfestigkeit in Verbindung mit einer guten Korrosionsbeständigkeit im Vergleich zu herkömmlichen Werkstoffen, wie die im Stand der Technik erwähnten, angesehen werden.

Infolgedessen können mit dem durch die Erfindung bereitgestellten ledeburitischen Gusseisenwerkstoff mit Graphit spezielle Anwendungsfälle mit beispielsweise hohen Umfangsgeschwindigkeiten (> 5 m/s) und großem Durchmesser (D > 600 mm) der Laufwerksdichtungen, die bis dato mit den aus dem Stand der Technik bekannten Werkstoffen nicht durchzuführen waren, gelöst und damit entsprechende, technische Verbesserungen, auf dem Sektor von Laufwerksdichtungen erreicht werden.

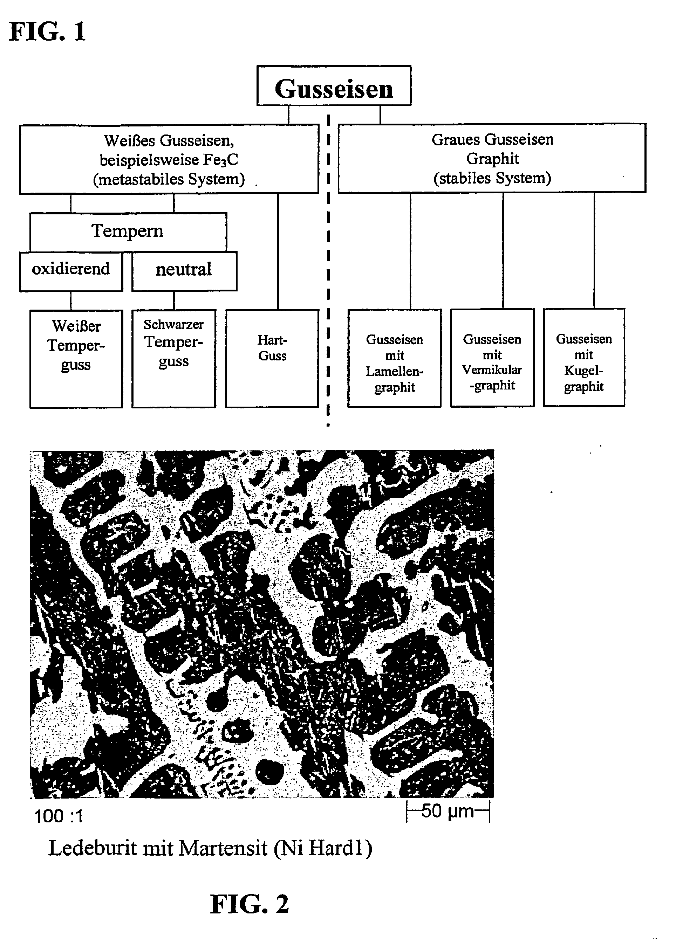

Die Figur 1 zeigt mögliche Ausbildungsformen des Gusseisens.

Dabei wird das Gusseisen in weißes Gusseisen und graues Gusseisen unterteilt.

Das weisse Gusseisen, beispielsweise Fe - Fe₃C, wird dabei in einem metastabilen System ausgebildet. Bisher wurden die verwendeten Hartgusswerkstoffe, wie beispielsweise Ni-Hard 1 bis Ni-Hard 4 ohne entsprechende gleichverteilte Graphitausbildung hergestellt. Dabei ist das Gefüge ledeburitisch.

Unter einem Ledeburit versteht man dabei ein Karbidnetz mit Perlit oder Martensit oder Bainit. Der Vorteil dieses Werkstoffes liegt darin begründet, dass er über eine sehr gute Verschleiß- und Korrosionsbeständigkeit verfügt, hingegen jedoch nur über eine sehr niedrige Wärmeleitfähigkeit von ungefähr 12 W / (m*K).

Andererseits versteht man unter grauem Gusseisen ein entsprechendes Gusseisen mit gleichverteilter Graphitausbildung in einem stabilen (Fe - C) System.

Dabei kann das graue Gusseisen unterteilt werden in Gusseisen mit Lamellengraphit, Gusseisen mit Vermikulargraphit und Gusseisen mit Kugelgraphit. Es ergibt sich ein weicheres, weniger verschleiß- und korrosionsbeständiges Gusseisen aber einer sehr guten Wärmeleitfähigkeit. Insbesondere weist GJL (ISO-Abkürzung für Lamellengraphit) eine Wärmeleitfähigkeit von ungefähr 45 W /(m*K) auf.

Die Figur 2 zeigt eine Detail-Schliffaufnahme im Maßstab 100:1 eines Ledeburit-Gefüges mit Martensit am Beispiel von Ni Hard 1. Dabei stammen die heller gefärbten Ausformungen (Phasen) der Karbide vom Ledeburit. Die dunkleren Bereiche (Phasen) sind Martensit.

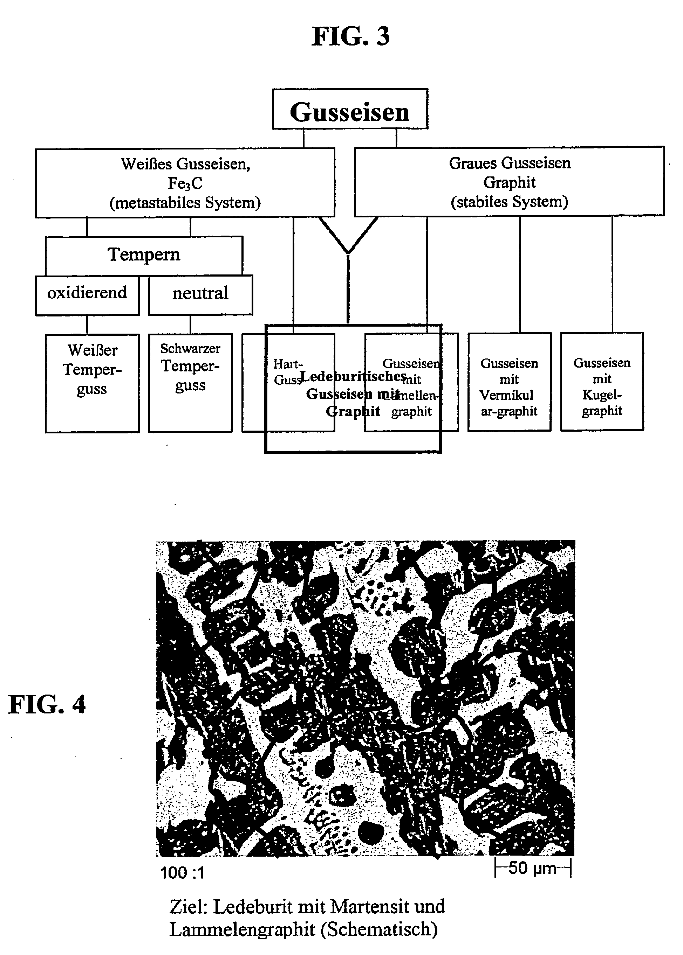

Die Figur 3 stellt ein entsprechendes Diagramm des ledeburitischen Gusseisens mit Graphit. wie in Figur 1 dar, allerdings mit einem überlappenden Bereich zwischen weißem Gußeisen und grauem Gußeisen

Eine entsprechende, schematische Detail-Schliffaufname ist in Figur 4 gezeigt. Dabei ist der gewünschte Lamellengraphit im Gegensatz zu Figur 2 schematisch eingezeichnet.

Um das gewünschte Gefüge mit gleichverteilter Graphitausbildung zu erreichen, werden ein hoher Kohlenstoffgehalt (C) von mindestens 4 Gew.-%, ein niedriger, gewichtsprozentmäßiger Siliziumgehalt von < 1,8 %, eine gezielte Impfbehandlung der Schmelze, welche wanddickenabhängig ist und entsprechende Legierungszusätze wie Nickel (Ni), Chrom (Cr), Molybdän (Mo), Mangan (Mn), Phosphor (P), und so weiter benötigt.

Um das gewünschte Gefüge zu erreichen, ist es darüber hinaus notwendig, das Karbidnetz des Ledeburits durch Graphitwachstum nicht zu zerstören, das heißt, die Mehrheit vom Graphit muß als stabiles System als Primärgraphit auskristallisieren, wobei der Rest des Kohlenstoffs mit der Schmelze im metastabilen System den Ledeburit bildet.

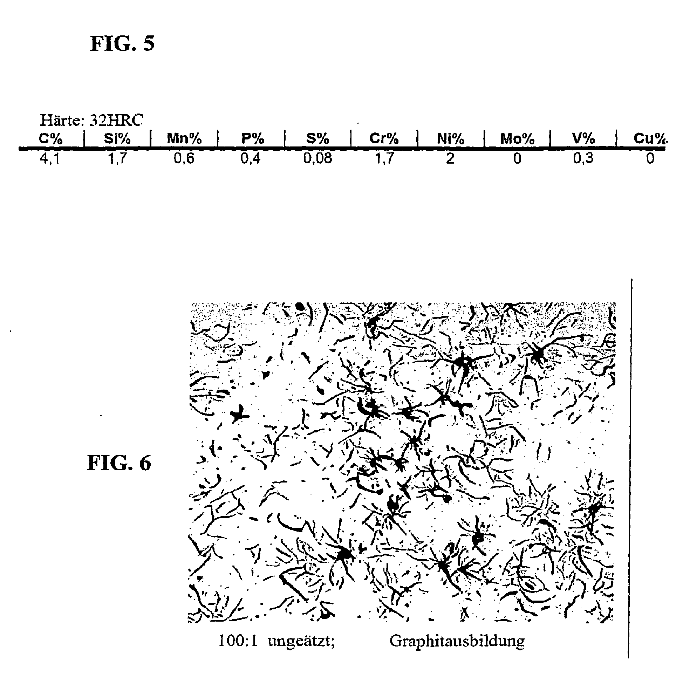

Eine bevorzugte, gewichtsprozentmäßige, chemische Ausführungsform des ledeburitischen Gusseisenwerkstoffs mit freier, gleich verteilter Graphitausbildung und einem Karbidanteil von mindestens 15,0 Gew.-% ist in Figur 5 dargestellt.

Eine erfindungsmäß bevorzugte Ausführungsform weist dabei folgende gewichtsprozentmäßigen Anteile auf:

| | |
|---|---|
| Kohlenstoff(C) | 4,1 Gew.-%, |
| Silizium (Si) | 1,7 Gew.-%, |
| Mangan (Mn) | 0,6 Gew.-%, |
| Phosphor (P) | 0,4 Gew.-%, |
| Schwefel (S) | 0,08 Gew.-%, |
| Chrom (Cr) | 1,7 Gew.-%, |
| Nickel (Ni) | 2,0 Gew.-%, |
| Molybdän (M) | 0,0 Gew.-%, |
| Vanadium (V) | 0,3 Gew.-% |
| Kupfer (Cu) | 0,0 Gew.-%, sowi |

Eisen und herstellungsbedingte Verunreinigungen als Rest.

Die entsprechende, gleich verteilte Graphitausbildung des durch die Erfindung bereitgestellten Gusseisenwerkstoffs ist aus der Schnittaufnahme der Figur 6 ersichtlich. Dabei ist eine ungeätzte Schnittaufnahme im Maßstab 100:1 mit entsprechender, gleich verteilter Graphitausbildung abgebildet.

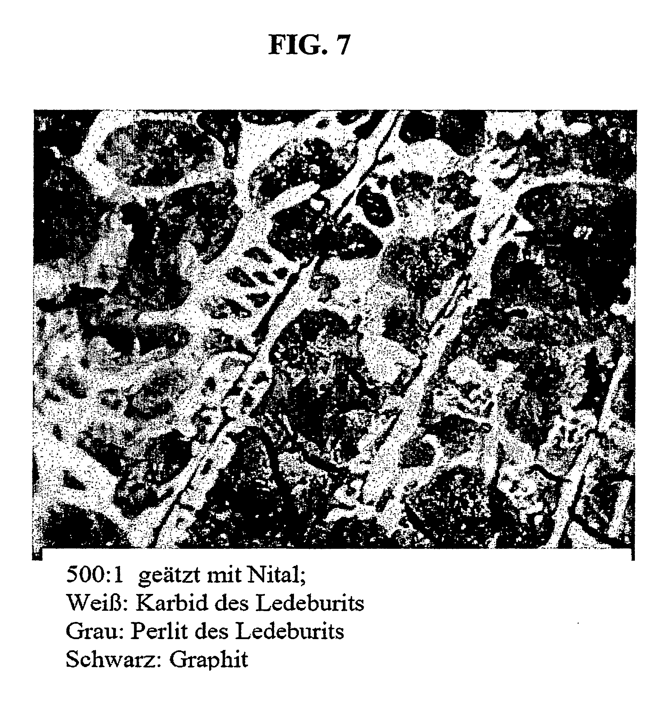

Weitere Details des durch die Erfindung bereitgestellten, ledeburitischen Gusseisenwerkstoffs der Schnittaufnahme von Figur 6 sind aus Figur 7 ersichtlich. Dabei wurde der Werkstoffschnitt mit Nital geätzt, wodurch weitere Phasendetails im Gusseisenwerkstoff wie beispielsweise Karbid des Ledeburits (weiß), Perlit des Ledeburits (Grau) und Graphit (Schwarz) im Maßstab 500:1 besser ersichtlich sind.

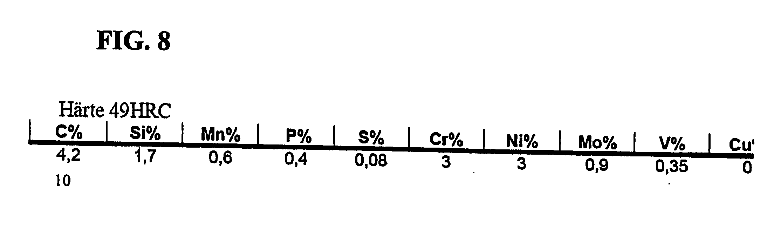

Eine weitere, bevorzugte gewichtsprozentmäßige, chemische Ausführungsform der vorliegenden Erfindung ist in Figur 8 dargestellt.

Dabei weist eine bevorzugte Ausführungsform des ledeburitischen Gusseisenwerkstoffs mit freier, gleich verteilter Graphitausbildung und hohem Karbidanteil von mindestens 15 Gew.-% die folgende chemische, gewichtsprozentmäßige Zusammensetzung auf:

| | |
|---|---|
| Kohlenstoff (C) | 4,2 Gew.-%, |
| Silizium (Si) | 1,7 Gew.-%, |
| Mangan (Mn) | 0,6 Gew.-%, |
| Phosphor (P) | 0,4 Gew.-%, |
| Schwefel (S) | 0,08 Gew.-%, |
| Chrom (Cr) | 3,0 Gew.-%, |
| Nickel (Ni) | 3,0 Gew.-%, |
| Molybdän (M) | 0,9 Gew.-%, |
| Vanadium (V) | 0,35 Gew.-%, |
| Kupfer (Cu) | 0,0 Gew.-%, sowie |

Eisen und herstellungsbedingte Verunreinigungen als Rest.

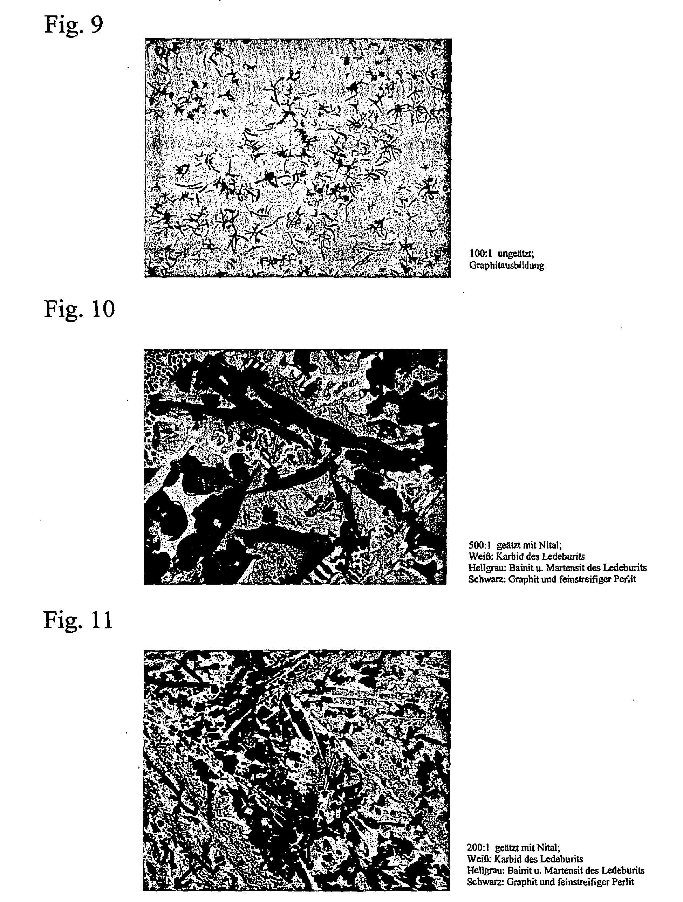

Eine entsprechende, gleich verteilte Graphitausbildung des ledeburitischen Gusseisenwerkstoffs ist aus Figur 9 ersichtlich. Dabei ist eine ungeätzte Schnittaufnahme des erfindungsgemäßen Gusseisenwerkstoffs im Maßstab 100:1 mit entsprechender gleich verteilter Graphitausbildung abgebildet.

Weitere Details der Schnittaufnahme von Figur 9 sind in Figur 10 ersichtlich. Dabei wurde der ledeburitische Gusseisenwerkstoff geschnitten und mit Nital geätzt, wodurch weitere Details wie Karbid des Ledeburits (weiß), Bainit und Martensit des Ledeburits (Hellgrau) und Graphit, sowie feinstreifiger Perlit (Schwarz) im Maßstab 500:1 besser ersichtlich sind.

Zusätzliche Details der Schnittaufnahme von Figur 9 sind ebenso in Figur 11 ersichtlich.

Dabei wurde der Werkstoffschnitt ebenfalls mit Nital geätzt, wodurch weitere Details wie Karbid des Ledeburits (weiß), Bainit und Martensit des Ledeburits (Hellgrau) und Graphit mit feinstreifigem Perlit (Schwarz) im Maßstab 200:1 besser ersichtlich sind.

Obwohl die Erfindung speziell in Bezug auf die dargelegten Ausführungsformen dargestellt wurde, ist für Fachleute, die mit dem Stand der Technik vertraut sind, klar ersichtlich, dass Änderungen an oder in der Form oder in Details ausgeführt werden können, ohne
den Schutzumfang, der durch die angefügten Ansprüche definierten Erfindung zu verlassen.

## Patentansprüche

1. Werkstoff aus ledeburitischem Gusseisen mit Graphit, wobei das ledeburitische Gusseisen
Graphit in einer freien, gleichverteilten Ausbildung;
einen Karbidanteil von mindestens 15,0 Gew.-%;
4,1 - 5,0 Gew.-%, Kohlenstoff (C),
1,0 - 1,8 Gew.-%, Silizium (Si),
maximal 1,0 Gew.-% Mangan (Mn),
maximal 0,8 Gew.-% Phosphor (P),
maximal 0,3 Gew.-% Schwefel (S),
maximal 10,0 Gew.-% Chrom (Cr),
maximal 3,0 Gew.-% Kupfer (Cu),
maximal 3,0 Gew.-% Molybdän (Mo),
maximal 0,25 Gew.-% Zinn (Sn),
maximal 4,0 Gew.-% Nickel (Ni),
maximal 3,0 Gew.-% Vanadium (V) sowie
Eisen und herstellungsbedingte Verunreinigungen als Rest aufweist.

2. Werkstoff aus ledeburitischen Gusseisen mit Graphit, gemäß Anspruch 1, **dadurch gekennzeichnet, dass** der Werkstoff eine Mischung aus Hartguss und Grauguss in einem beliebigen Mischungsverhältnis aufweist.

3. Werkstoff aus ledeburitischen Gusseisen mit Graphit gemäß den Ansprüchen 1 bis 2, **dadurch gekennzeichnet, dass** die freie Graphitausbildung Lamellengraphit umfasst.

4. Werkstoff aus ledeburitischen Gusseisen mit Graphit gemäß den Ansprüch 1 bis 2, **dadurch gekennzeichnet, dass** die freie Graphitausbildung Vermikulargraphit umfasst.

5. Werkstoff aus ledeburitischen Gusseisen mit Graphit gemäß den Ansprüchen 1 bis 2, **dadurch gekennzeichnet, dass** die freie Graphitausbildung Lamellengraphit und/oder Vermikulargraphit und/oder Kugelgraphit umfasst.

6. Werkstoff aus ledeburitischem Gusseisen mit Graphit gemäß den Ansprüchen 1 bis 5, **dadurch gekennzeichnet, dass** eine Grundmatrix des ledeburitischen Gusseisens perlitisch ist.

7. Werkstoff aus ledeburitischen Gusseisen mit Graphit gemäß den Ansprüchen 1 bis 6, **dadurch gekennzeichnet, dass** eine Grundmatrix des ledeburitischen Gusseisens bainitisch und/oder martensitisch ist.

8. Werkstoff aus ledeburitischen Gusseisen mit Graphit gemäß den Ansprüchen 1 bis 6, **dadurch gekennzeichnet, dass** die freie Graphitausbildung gleich verteilt ist.

9. Werkstoff aus ledeburitischem Gusseisen mit Graphit gemäß den Ansprüchen 1 bis 8, **dadurch gekennzeichnet, dass** ein Härten und/oder Anlassen des ledeburitischen Gusseisens mittels Wärmebehandlung erfolgen kann.

10. Werkstoff aus ledeburitischem Gusseisen mit Graphit gemäß den Ansprüchen 1 bis 9, **dadurch gekennzeichnet, dass** das ledeburitische Gusseisen nitriert oder oberflächenbeschichtet sein kann.

11. Verwendung des Werkstoffs aus ledeburitischem Gusseisen mit Graphit gemäß den Ansprüchen 1 bis 10 für die Herstellung von Gleitringen für Laufwerksdichtungen.

12. Verwendung des Werkstoffs aus ledeburitischem Gusseisen mit Graphit gemäß den Ansprüchen 1 bis 10 für die Herstellung von Laufbuchsen.

13. Verwendung des Werkstoffs aus ledeburitischen Gusseisen mit Graphit gemäß den Ansprüchen 1 bis 10 für die Herstellung beliebiger Dichtelemente oder Verschleißelemente.

14. Verwendung des Werkstoffs aus ledeburitischen Gusseisen mit Graphit gemäß den Ansprüchen 1 bis 10 als Dichtelement bei hohen Umfangsgeschwindigkeiten (> 5 m/s) und/oder großem Durchmesser der Laufwerksdichtungen (> 600 mm).

## Claims

1. A material of ledeburitic cast iron with graphite, wherein the ledeburitic cast iron contains
graphite in a free, evenly distributed formation and
has a carbide content of at least 15.0 wt.%;
4.1-5.0 wt.% carbon (C),
1.0-1.8 wt.% silicon (Si),
no more than 1.0 wt.% manganese (Mn),
no more than 0.8 wt.% phosphorus (P),
no more than 0.3 wt.% sulphur (S),
no more than 10.0 wt.% chromium (Cr),
no more than 3.0 wt.% copper (Cu),
no more than 3.0 wt.% molybdenum (Mo),
no more than 0.25 wt.% tin (Sn),
no more than 4.0 wt.% nickel (Ni),
no more than 3.0 wt.% vanadium (V), as well as
iron and manufacturing-related impurities as the remainder.

2. The material of ledeburitic cast iron with graphite according to Claims 1, **characterized in that** the material contains a mixture of white cast iron and grey cast iron in an arbitrary mixing ratio.

3. The material of ledeburitic cast iron with graphite according to one of Claims 1 to 2, **characterized in that** the free graphite formation comprises graphite flakes.

4. The material of ledeburitic cast iron with graphite according to one of Claims 1 to 2, **characterized in that** the free graphite formation comprises vermicular graphite.

5. The material of ledeburitic cast iron with graphite according to Claims 1 to 2,
**characterized in that** the free graphite formation comprises graphite flakes and/or vermicular graphite and/or nodular graphite.

6. The material of ledeburitic cast iron with graphite according to Claims 1 to 5, **characterized in that** a basic matrix of the ledeburitic cast iron is pearlitic.

7. The material of ledeburitic cast iron with graphite according to Claims 1 to 6, **characterized in that** a basic matrix of the ledeburitic cast iron is bainitic and/or martensitic.

8. The material of ledeburitic cast iron with graphite according to Claims 1 to 6, **characterized in that** the free graphite formation is evenly distributed.

9. The material of ledeburitic cast iron with graphite according to Claims 1 to 8, **characterized in that** a hardening and/or annealing of the ledeburitic cast iron can be realized by means of a heat treatment.

10. The material of ledeburitic cast iron with graphite according to Claims 1 to 9, **characterized in that** the ledeburitic cast iron may be nitride-hardened or surfaced-coated.

11. Use of the ledeburitic cast iron with graphite according to Claims 1 to 10 for the manufacture of sliding rings for running gear seals.

12. The use of the ledeburitic cast iron with graphite according to Claims 1 to 10 for the manufacture of cylinder liners.

13. The use of the ledeburitic cast iron with graphite according to Claims 1 to 10 for the manufacture of any sealing elements or wearing elements.

14. The use of the ledeburitic cast iron with graphite according to Claims 1 to 10 as a sealing element for high peripheral speeds (> 5 m/s) and/or a large diameter of the running gear seals (> 600 mm).

## Revendications

1. Matériau constitué de fonte de lédeburite avec du graphite, la fonte de lédeburite présentant du graphite dans une formation libre, uniforme ; une teneur en carbure d'au moins 15,0 % en poids ; de 4,1 à 5,0 % en poids de carbone (C), de 1,0 à 1,8 % en poids de silicium (Si), au maximum 1,0 % en poids de manganèse (Mn), au maximum 0,8 % en poids de phosphore (P), au maximum 0,3 % en poids de soufre (S), au maximum 10,0 % en poids de chrome (Cr), au maximum 3,0 % en poids de cuivre (Cu), au maximum 3,0 % en poids de molybdène (Mo), au maximum 0,25 % en poids d'étain (Sn), au maximum 4,0 % en poids de nickel (Ni), au maximum 3,0 % en poids de vanadium (V) ainsi que du fer et des impuretés de fabrication comme reste.

2. Matériau constitué de fonte de lédeburite avec du graphite selon la revendication 1, **caractérisé en ce que** la matériau présente un mélange de fonte trempée et de fonte grise dans un rapport de mélange donné.

3. Matériau constitué de fonte de lédeburite avec du graphite selon les revendications 1 à 2, **caractérisé en ce que** la formation de graphite libre comprend du graphite lamellé.

4. Matériau constitué de fonte de lédeburite avec du graphite selon les revendications 1 à 2,
**caractérisé en ce que** la formation de graphite libre comprend du graphite vermiculaire.

5. Matériau constitué de fonte de lédeburite avec du graphite selon les revendications 1 à 2, **caractérisé en ce que** la formation de graphite libre comprend du graphite lamellé et/ou du graphite vermiculaire et/ou du graphite nodulaire.

6. Matériau constitué de fonte de lédeburite avec du graphite selon les revendications 1 à 5, **caractérisé en ce qu'**une matrice de base de la fonte de lédeburite est perlitique.

7. Matériau constitué de fonte de lédeburite avec du graphite selon les revendications 1 à 6, **caractérisé en ce qu'**une matrice de base de la fonte de l'edeburite est bainitique et/ou martensitique.

8. Matériau constitué de fonte de lédeburite avec du graphite selon les revendications 1 à 6, **caractérisé en ce que** la formation de graphite libre est uniforme.

9. Matériau constitué de fonte de lédeburite avec du graphite selon les revendications 1 à 8, **caractérisé en ce qu'**un durcissement et/ou un démarrage de la fonte de lédeburite a lieu au moyen d'un traitement thermique.

10. Matériau constitué de fonte de lédeburite avec du graphite selon les revendications 1 à 9, **caractérisé en ce que** la fonte de lédeburite peut être nitrurée ou revêtue en surface.

11. Utilisation du matériau constitué de fonte de lédeburite avec du graphite selon les revendications 1 à 10, pour la fabrication de bagues de glissement pour des joints d'organe de roulement.

12. Utilisation du matériau constitué de fonte de lédeburite avec du graphite selon les revendic-tions 1 à 10, pour la fabrication de boîtes de glissement.

13. Utilisation du matériau constitué de fonte de lédeburite avec du graphite selon les revendications 1 à 10, pour la fabrication d'éléments de joint ou d'éléments de roulement.

14. Utilisation du matériau constitué de fonte de lédeburite avec du graphite selon les revendications 1 à 10, comme élément de joint pour des vitesses circonférentielles élevées (> 5 m/s) et/ou un grand diamètre des joints d'organe de roulement (> 600 mm).
